(19) Europäisches Patentamt / European Patent Office / Office européen des brevets

(11) **EP 4 715 431 A1**

(12) **EUROPÄISCHE PATENTANMELDUNG**

(43) Veröffentlichungstag:
25.03.2026 Patentblatt 2026/13

(21) Anmeldenummer: 25203575.3

(22) Anmeldetag: **22.09.2025**

(51) Internationale Patentklassifikation (IPC):
**G01V 7/02** (2006.01)     **G01P 15/00** (2006.01)

(52) Gemeinsame Patentklassifikation (CPC):
**G01V 7/02; G01P 15/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **23.09.2024 DE 102024127355**

(71) Anmelder: **Deutsches Zentrum für Luft- und Raumfahrt e.V.**
**53227 Bonn-Oberkassel (DE)**

(72) Erfinder:
• **Hetzel, Mareike**
**30159 Hannover (DE)**
• **Schubert, Christian**
**30167 Hannover (DE)**
• **Klempt, Carsten**
**30966 Hemmingen (DE)**

(74) Vertreter: **Günther, Constantin**
**Meissner Bolte Patentanwälte**
**Rechtsanwälte Partnerschaft mbB**
**Plathnerstraße 3A**
**30175 Hannover (DE)**

(54) **ATOMINTERFEROMETER MIT VERBESSERTER GEMEINSAMER RAUSCHUNTERDRÜCKUNG**

(57)     Die Erfindung betrifft ein Atominterferometer mit einer Laserlichtquelle, durch die erstes Laserlicht mit einer Grundfrequenz abstrahlbar ist, und mit wenigstens einer Lichtabgabevorrichtung, durch die zweites Laserlicht mit einer Frequenz abgebbar ist, die um eine Differenzfrequenz von der Grundfrequenz abweicht, und mit einer Atomfalle, in der ein oder mehrere Atomensembles einfangbar und mit dem ersten und dem zweiten Laserlicht bestrahlbar sind.

Fig. 1

EP 4 715 431 A1

**Beschreibung**

Die Erfindung betrifft ein Atominterferometer mit einer Laserlichtquelle, durch die erstes Laserlicht mit einer Grundfrequenz abstrahlbar ist, und mit wenigstens einer Lichtabgabevorrichtung, durch die zweites Laserlicht mit einer Frequenz abgebbar ist, die um eine Differenzfrequenz von der Grundfrequenz abweicht, und mit einer Atomfalle, in der ein oder mehrere Atomensembles einfangbar und mit dem ersten und dem zweiten Laserlicht bestrahlbar sind.

Atominterferometrische Gravimeter bieten langzeitstabile, absolute Schweremessungen. Ihr Messprinzip bietet im Vergleich zu den verbreiteten Lasergravimetern (FG5X) die Möglichkeit quasikontinuierlicher Datenaufnahme über einen längeren Zeitraum sowie die Perspektive einer höheren Genauigkeit. Es wurden bereits transportable und kommerzielle Geräte realisiert sowie auch auf einer mobilen Plattform wie einem Schiff betrieben. Ein wesentlicher Bestandteil eines atominterferometrischen Gravimeters oder allgemein eines Atominterferometers ist die Quelle für kalte Atome. Typischerweise basieren diese auf Laserkühlung in magnetooptischen Fallen und Polarisationsgradientenkühlung. Eine dreidimensionale magnetooptische Falle benötigt neben Magnetfeldern auch Lichtfelder, die typischerweise auf den drei Raumachsen jeweils anti-parallel eingestrahlt werden, um eine sogenannte Wechselwirkungszone zum Kühlen gefangener Atome zu bilden. Dies impliziert einen vergleichsweise komplexen Aufbau mit mehreren Strahlformungsoptiken und entsprechenden optischen Zugängen zum Vakuumsystem, in dem die Atome gefangen und gekühlt werden. Speziell ausgelegte Pyramiden- oder Gitterstrukturen wurden erfolgreich dafür verwendet, aus einem einzigen einfallenden Laserstrahl eine Strahlgeometrie zu schaffen, die effektiv in allen drei Raumachsen kühlen kann.

Wesentlicher Bestandteil eines atominterferometrischen Gravimeters ist das Lasersystem, welches die Laserstrahlen für die Interferometriepulse erzeugt. Die Interferometriepulse wirken auf das atomare Ensemble (d.h. die in einer Wechselwirkungszone gefangene Atomwolke) in zwei oder mehr Wechselwirkungszonen im Vakuumsystem. Durch die Interferometriepulse werden die Atome in quantenmechanische Superpositionszustände überführt, die sich räumlich auftrennen, und zur Interferenz wieder zusammengeführt. Das Interferenzsignal ist hierbei sensitiv auf Beschleunigungen, wodurch ein Gravimeter realisiert werden kann. Die Laserstrahlen benötigen üblicherweise zwei verschiedene Frequenzkomponenten, die gleichzeitig eingestrahlt werden. Zur Erzeugung dieser Frequenzkomponenten gibt es verschiedene Möglichkeiten, bei denen Kompromisse zwischen Volumen, Kosten und der Reinheit des Frequenzspektrums getroffen werden müssen. Eine beliebte Lösung ist die Frequenzmodulation eines Lasers beispielsweise mittels akusto-optischer oder elektro-optischer Modulatoren (AOMs und EOMs), da sie ein kompaktes und kostengünstiges Lasersystem ermöglicht. Durch die Erzeugung der gewünschten Frequenzen mit optischen Modulatoren entstehen aber auch unerwünschte Frequenzanteile, die die Signalqualität beeinträchtigen. Da atominterferometrische Gravimeter Laserstrahlen aus beiden vertikalen Raumrichtungen erfordern, wird der Laserstrahl häufig erst aus einer Richtung auf das atomare Ensemble gerichtet und nach der Passage durch einen Spiegel wieder zurückreflektiert. Dadurch werden beide Raumrichtungen abgedeckt.

Eine wichtige Anwendung von Gravimetern ist deren Verwendung für Gradiometer, bei denen zwei räumlich getrennte Gravimeter gleichzeitig betrieben werden. Aus dem Differenzsignal lässt sich die erste Ableitung der Schwerkraft ermitteln, der Gravitationsgradient. Für das Differenzsignal ergibt sich eine gemeinsame Rauschunterdrückung (common-noise rejection), bei der das Gradiometersignal nur von technischen Rauschquellen verschlechtert wird, die unterschiedlich auf die beiden Gravimeter wirken. Dabei ist von besonderer Bedeutung, dass die beiden Gravimeter möglichst symmetrisch betrieben werden, um maximal von der beschriebenen Rauschunterdrückung zu profitieren.

In der Interferometrie werden im Wesentlichen die Phasenbeziehungen zweier Wellen gemessen, in diesem Fall von Materiewellen. Wenn man mit dem Atominterferometer beispielsweise den Gradienten der Gravitation messen möchte, dann enthält das obere Atominterferometer die Gravitationsinformation über die Gravitation in einer Höhe $h_1$ und das untere Atominterferometer die Gravitationsinformation in einer Höhe $h_2$. Je größer der Abstand der Atominterferometer ist, desto größer wird das Differenzsignal. Aus Atominterferometer 1 und 2 erhält man (vereinfacht dargestellt)

$$\varphi_1 = \varphi_{h1} + \varphi_{Störung}(h_1) \text{ und } \varphi_2 = \varphi_{h2} + \varphi_{Störung}(h_2).$$

Wenn die Störung durch eine unerwünschte Frequenzkomponente erzeugt wird, ist sie periodisch mit dem Abstand, sodass die Störung in verschiedenen Abständen denselben Wert hat. Wenn man dann den Gradienten berechnet, fallen die Störterme heraus:

$$\Delta\varphi = \varphi_1 - \varphi_2 = \varphi_{h1} + \varphi_{Störung}(h_1) - \varphi_{h2} + \varphi_{Störung}(h_2) = \varphi_{h1} - \varphi_{h2}$$

Der Stand der Technik in der Gradiometrie mit kompakten Atominterferometern wird durch die Veröffentlichung WO 2014/106811 A2 gut beschrieben. Das Gradiometer besteht aus zwei (oder mehr) Wechselwirkungszonen. Das Patent WO 2014/106811 A2 konzentriert sich hierbei auf die kompakte und gleichzeitige Erzeugung mehrerer Atomwolken mittels Pyramidenreflektoren. Eine gute Rauschunterdrückung in Gradiometern wird dadurch erreicht, dass die Laserstrahlen für die Interferometrie beide Atomwolken gleichzeitig treffen. Dies wird häufig realisiert, in dem ein Laserstrahl mit den nötigen Frequenzkomponenten alle Atomwolken passiert, an einem Spiegel reflektiert wird und dann die Atomwolken aus der entgegengesetzten Richtung wieder trifft.

Sind im Frequenzspektrum des Interferometrielichts nicht nur die beiden notwendigen, sondern noch weitere Frequenzkomponenten enthalten, können diese Frequenzanteile zusätzliche Phasenbeiträge beim Auslesen des Interferometers erzeugen. Diese Phasenbeiträge können bestimmt und bei der Signalanalyse berücksichtigt werden. Allerdings limitieren Unsicherheiten oder Rauschen der Betriebsparameter die Charakterisierung dieser Phasenbeiträge, sodass diese Effekte die Sensitivität des Gravimeters begrenzen können.

In der Gradiometerkonfiguration, in der zwei oder mehrere Interferometer mit einem Abstand zueinander betrieben werden, erfährt jedes Atominterferometer einen eigenen, vom Abstand zum Spiegel abhängigen Phasenbeitrag. Da dieser nicht für beide Interferometer gleich ist, kann der differentielle Phasenbeitrag im Gradiometer noch größer werden als im Gravimeter und ebenfalls die Sensitivität des Gradiometers begrenzen.

Die optische Weglänge ist in der Wellenoptik die mit der Brechzahl n des Ausbreitungsmediums multiplizierte geometrische Weglänge $l$ längs eines Lichtstrahls. Die optische Weglänge ist somit wegen der Definition der Brechzahl die auf das Vakuum bezogene Weglänge beim Durchtritt des Lichtes durch ein Medium mit der Brechzahl n und der Länge $l$ . Anders gesagt ist die optische Weglänge die Streckenlänge, für die Licht im Vakuum die gleiche Zeit benötigt wie für einen gegebenen Weg mit möglicherweise abweichender Phasengeschwindigkeit (der Geschwindigkeit, mit der die Wellenfronten des Lichts fortschreiten). Befinden sich im Lichtstrahlweg des ersten und zweiten Laserlichts keine Objekte mit variierenden Brechzahlen, kann die optische Weglänge auch durch die geometrische Weglänge (nachfolgend Abstand genannt) definiert sein. Sofern nachfolgend der Begriff Abstand verwendet wird, schließt dies die optische Weglänge des jeweiligen Lichtstrahls ein.

Der Erfindung liegt die Aufgabe zugrunde, ein verbessertes Atominterferometer anzugeben.

Diese Aufgabe wird bei einem Atominterferometer der eingangs genannten Art dadurch gelöst, dass

a) im Fall mehrerer Atomensembles die optische Weglänge zwischen zwei Atomensembles, die einander als Paar zugeordnet sind und eine Gradiometer-Anordnung bilden, der halben Wellenlänge oder einem ganzzahligen Vielfachen der halben Wellenlänge der Differenzfrequenz oder einer anderen Störfrequenz entspricht und/oder

b) die optische Weglänge zwischen einem Atomensemble und einem das erste und das zweite Licht reflektierenden Spiegel des Atominterferometers der halben Wellenlänge oder einem ganzzahligen Vielfachen der halben Wellenlänge der Differenzfrequenz oder einer anderen Störfrequenz entspricht.

Wenn somit der Abstand der beiden Atominterferometer bzw. deren zwei Atomensembles in der Gradiometerkonfiguration nicht beliebig wird, sondern optimal gewählt wird, kann hierdurch der differentielle Phasenversatz zwischen den Interferometern unterdrückt werden. Die Phasenbeiträge im Atominterferometer durch unerwünschte Frequenzkomponenten zeigen ein periodisches Verhalten bei der Änderung des Abstands zwischen den zwei Atomensembles bzw. zwischen Spiegel und Atomensemble. Die Periodizität des Effekts ist durch die halbe Wellenlänge der unerwünschten Modulationsfrequenz gegeben. Ist diese Frequenz bereits in der Entwicklungsphase des Gradiometers bekannt, kann der Abstand der Interferometer optimiert werden. Beträgt der Abstand der beiden Atominterferometern genau ein Vielfaches der halben Wellenlänge der unerwünschten Modulationsfrequenz, erfahren die Atominterferometer zu jeder Zeit denselben Phasenbeitrag, sodass er in der differentiellen Analyse im Gradiometer herausfällt.

Der genannte Abstandswert bzw. Wert der optischen Weglänge muss dabei nicht unbedingt ganz exakt erreicht werden, auch ein ungefähres Erreichen des gewünschten Werts bewirkt bereits eine deutliche Verbesserung der Genauigkeit und Rauschunterdrückung des Atominterferometers.

Die Erfindung kann nicht nur zur Kompensation von durch die Differenzfrequenz erzeugten Störeffekten genutzt werden, sondern auch zur Kompensation von Störeffekten, die durch beliebige andere auf das erste Laserlicht aufmodulierte Störfrequenzen erzeugt werden.

Die Erfindung ist analog auf ein System mit drei oder mehr Atominterferometern bzw. deren Atomensembles anwendbar, die sich in einem definierten Abstand befinden.

Die Erfindung kann auch auf einzelne Atominterferometer beliebiger Art angewandt werden. Wenn sich die optische Weglänge zwischen den Atomensembles und dem Spiegel nicht oder nur kaum ändert, wie beispielsweise bei Gyroskopen, kann der Abstand zwischen den Atomensembles und dem Spiegel so gewählt werden, dass er einem Vielfachen der halben Wellenlänge der Störfrequenz entspricht, so dass der aufgeprägte Phasenversatz für alle Interferometriepulse null ist. Ändern sich die Abstände zum Spiegel, können die Abstände der Interaktionszonen so gewählt werden, dass sie einem Vielfachen der halben Wellenlänge der Störfrequenz entsprechen.

In einer vorteilhaften Ausgestaltung kann die optische Weglänge zwischen den zwei Atomensembles (im Falle eines Paars von Atomensembles) bzw. die optische Weglänge zwischen einem Atomensemble und dem Spiegel wenigstens das Zweifache, das Dreifache oder das Vierfache der halben Differenzfrequenz entsprechen. Dies hat den Vorteil, dass hierdurch praxistaugliche geometrische Dimensionen erreicht werden können, die im Bereich von mehreren Zentimetern für die optische Weglänge liegen. Dementsprechend müssen bekannte Atominterferometer hinsichtlich ihrer mechanischen Konstruktion nicht völlig verändert werden, sondern lediglich in moderatem Umfang auf den gewünschten Abstandswert gebracht werden.

Gemäß einer vorteilhaften Ausgestaltung der Erfindung ist das Atominterferometer zur Durchführung der Raman-Interferometrie eingerichtet. Dabei können z.B. Raman-Lichtinterferometriesequenzen durch das Atominterferometer ausgeführt werden. Dabei dient das erste Laserlicht und das um die Differenzfrequenz davon abweichende zweite Laserlicht der Aufprägung verschiedener Impulszustände auf die verwendeten Atome.

Gemäß einer vorteilhaften Ausgestaltung der Erfindung ist vorgesehen, dass das Atominterferometer als Gradiometer ausgebildet ist, bei dem zwei einander als Paar zugeordnete Atomensembles die Gradiometer-Anordnung bilden. Mit einem solchen Gradiometer können mit besonders guter Sensitivität Messungen des Schwerefelds durchgeführt werden, insbesondere zur Bestimmung des Gravitationsgradienten des Schwerefelds.

Gemäß einer vorteilhaften Ausgestaltung der Erfindung ist vorgesehen, dass das Atominterferometer als Gravimeter ausgebildet ist. Mit einem solchen Gravimeter können mit besonders guter Sensitivität langzeitstabile, absolute Schweremessungen durchgeführt werden.

Gemäß einer vorteilhaften Ausgestaltung der Erfindung ist vorgesehen, dass die Lichtabgabevorrichtung als optischer Modulator ausgebildet ist, durch den das erste Laserlicht durch optische Modulation in das zweite Laserlicht wandelbar ist. Dies erlaubt eine einfache und zuverlässige Bereitstellung des zweiten Laserlichts, das um die Differenzfrequenz von der Grundfrequenz des ersten Laserlichts abweicht. Der optische Modulator kann z.B. als elektro-optischer Modulator oder akusto-optischer Modulator ausgebildet sein. Das zweite Laserlicht kann somit durch Bestrahlung eines optischen Modulators mit dem ersten Laserlicht der Laserlichtquelle oder einer anderen Lichtquelle, die erstes Laserlicht mit der Grundfrequenz abstrahlt, und Ansteuerung des optischen Modulators mit der gewünschten Differenzfrequenz erzeugt werden. Es ist auch möglich, das zweite Laserlicht durch eine von der ersten Laserlichtquelle separate zweite Laserlichtquelle, zu erzeugen, die direkt das um die Differenzfrequenz von der Grundfrequenz abweichende zweite Laserlicht abzugeben, d.h. ohne zusätzlichen optischen Modulator.

Gemäß einer vorteilhaften Ausgestaltung der Erfindung ist vorgesehen, dass die optische Weglänge zwischen zwei einander als Paar zugeordneten Atomensembles durch den Abstand der Start- und/oder Endorte zweier durch die Atomensembles gebildeten Interferometer voneinander festgelegt ist.

Gemäß einer vorteilhaften Ausgestaltung der Erfindung ist vorgesehen, dass die optische Weglänge zwischen zwei einander als Paar zugeordneten Atomensembles durch den Abstand zweier Interferometrie-Interaktionszonen voneinander festgelegt ist. Dementsprechend kann das Atominterferometer bei seiner Konstruktion auf einfache Weise mit einer verbesserten Sensitivität realisiert werden. Beispielsweise können zwei pyramidenartige Spiegel, wie sie z.B. in der WO 2014/106811 A2 beschrieben sind, hinsichtlich ihres Abstands derart angeordnet werden, dass der Abstand bzw. die resultierende optische Weglänge der halben Wellenlänge oder einem ganzzahligen Vielfachen der halben Wellenlänge der Differenzfrequenz oder einer anderen Störfrequenz entspricht.

Allgemein kann gesagt werden, dass der gewünschte Abstandswert durch Festlegung des Abstands der Interferometrie-Interaktionszonen voneinander und/oder einer Interferometrie-Interaktionszone von dem Spiegel festgelegt werden kann.

Gemäß einer vorteilhaften Ausgestaltung der Erfindung ist vorgesehen, dass der die optische Weglänge zwischen zwei einander als Paar zugeordneten Atomensembles durch Strahlteileroperationen (Impulsübertrag durch Atom-Licht-Wechselwirkung) festgelegt ist. Auf diese Weise kann z.B. die Sensitivität eines Gravimeters auf einfache Weise verbessert werden.

Gemäß einer vorteilhaften Ausgestaltung der Erfindung ist vorgesehen, dass die optische Weglänge eines Atomensembles von einem das erste und das zweite Licht reflektierenden Spiegel durch den Abstand einer Interferometrie-Interaktionszone, z.B. einer magneto-optischen Falle, von dem Spiegel festgelegt ist. Beispielsweise kann der gewünschte Abstandswert durch den Abstand eines pyramidenartigen Spiegels von dem Spiegel festgelegt werden.

Als Interferometrie-Interaktionszonen werden dabei Orte angesehen, an denen die jeweiligen Atom-Ensembles mit den Interferometrie-Lichtpulsen bestrahlt werden. Der Ort der Atome wird anfänglich durch die Position der magneto-optischen Falle bestimmt und ändert sich ggf. im Laufe der Interferometriesequenz durch die Bewegung der Atome im freien Fall und somit ändert sich auch der Ort der Interferometrie-Interaktionszonen.

Die Erfindung eignet sich für verschiedene Anwendungsgebiete, z.B.:

Geophysikalische Anwendungen:

- Überwachung von Vulkanen
- Monitoring seismischer Aktivitäten
- Hydrologie

Exploration:

- Rohstoffexploration
- Grundwasser-Management

Ingenieurwesen:

- Überwachung der Stabilität von Straßen, Dämmen und Deichen
- Erstellung von Schwerefeldkarten Detektion von Hohlräumen im Städtebau und in Bergbauregionen

Die Erfindung wird nachfolgend anhand von Ausführungsbeispielen unter Verwendung von Zeichnungen näher erläutert.

Es zeigen

Figur 1     ein Atominterferometer in schematisierter Darstellung,
Figur 2     Licht-Frequenzbänder in dem Atominterferometer,
Figur 3     eine erste Ausführungsform eines abstandsoptimierten Atominterferometers,
Figur 4     eine zweite Ausführungsform eines abstandsoptimierten Atominterferometers.

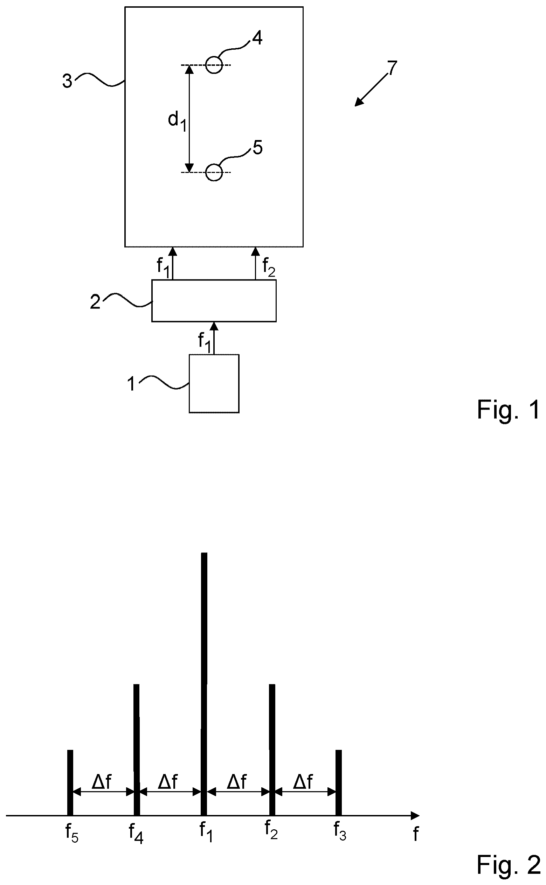

Die Figur 1 zeigt ein Atominterferometer 7, das z.B. als Gradiometer oder Gravimeter ausgebildet sein kann. Das Atominterferometer 7 hat eine Laserlichtquelle 1, durch die erstes Laserlicht mit einer Grundfrequenz $f_1$ abgegeben wird. Das Atominterferometer 7 hat außerdem eine Lichtabgabevorrichtung 2, z.B. mit einem optischen Modulator, durch die zweites Laserlicht mit einer Frequenz $f_2$ abgebbar ist. Die Frequenz $f_2$ ist dabei um eine Differenzfrequenz $\Delta f$ von der Grundfrequenz $f_1$ verschieden.

Das Atominterferometer 7 hat außerdem eine Atomfalle 3, in der mehrere Atomensembles 4, 5 an vordefinierten Positionen, d.h. an Wechselwirkungszonen, gefangen sind und mit dem ersten und dem zweiten Laserlicht bestrahlt werden, somit mit den unterschiedlichen Frequenzen $f_1$, $f_2$. Die Atomfalle 3 kann z.B. als magneto-optische Falle (MOT - magnetooptical trap) ausgebildet sein, z.B. wie in WO 2014/106811 A2 im Detail beschrieben ist.

Die in Figur 1 dargestellte Bestrahlung der Atomensembles 4, 5 mit Laserlicht, das nur die Frequenzen $f_1$, $f_2$ hat, ist dabei eine idealisierte Annahme, in der der in der Praxis auftretende Effekt vernachlässigt wird, das durch einen optischen Modulator, der mit der Differenzfrequenz $\Delta f$ angesteuert wird, nicht nur das eine gewünschte Frequenz-Seitenband $f_2$ erzeugt wird, sondern weitere unerwünschte Seitenbänder $f_3$, $f_4$, $f_5$,... usw., wie in der Figur 2 dargestellt ist. Wie man erkennt, sind die Seitenbänder alle durch die Differenzfrequenz $\Delta f$ voneinander beabstandet.

Ein vorteilhaftes Element zur Verwendung in atominterferometrischen Apparaten ist Rubidium, besonders das Isotop Rb-87. Für den Betrieb der interferometrischen Lichtpulse wird Licht der Wellenlänge 780 nm benötigt. Dabei werden zwei Frequenzen $f_1$, $f_2$ benötigt, die einen Abstand $\Delta f$ von 6.835 GHz haben. Eine der Frequenzen kann beispielsweise die Grundfrequenz der Laserquelle 1 sein. Die zweite Frequenz kann durch die Verwendung eines elektro-optischen Modulators mit einer Modulation bei 6.835 GHz auf das Licht dieses Lasers 1 aufgeprägt werden. Dabei entstehen die oben erläutertern Seitenbänder, die jeweils einen Abstand der gewählten Differenzfrequenz $\Delta f$ und deren Vielfache haben.

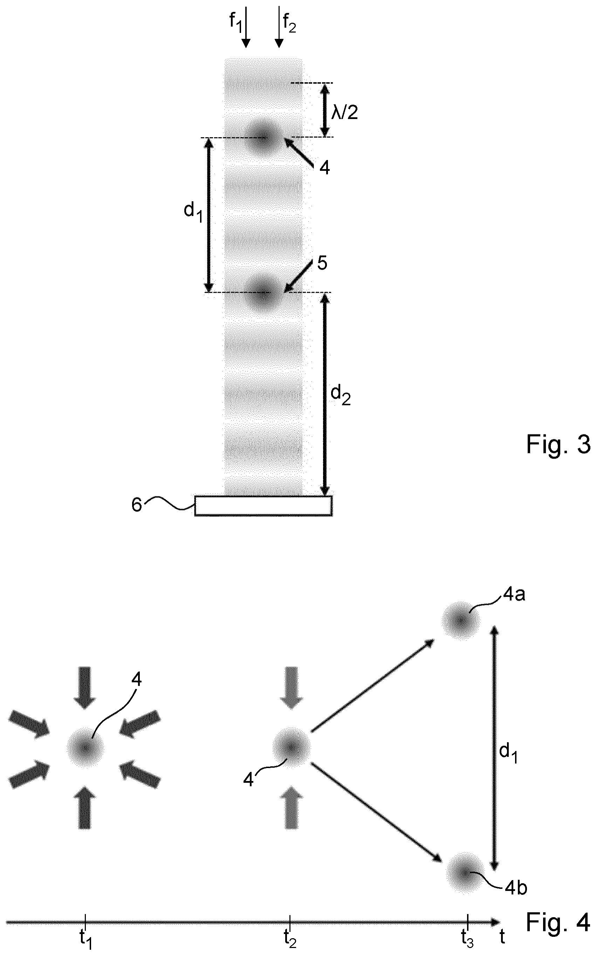

Die unerwünschten Frequenzseitenbänder führen zu einer Phasenverschiebung des Interferometriesignals. In der Gradiometerkonfiguration bei beliebig gewähltem Abstand erfahren beide Interferometer eine unterschiedliche Phasenverschiebung, sodass sich eine differentielle Phasenverschiebung ergibt. Diese differentielle Phasenverschiebung wird vermieden, wie die Figur 3 zeigt, wenn die optische Weglänge $d_1$ zwischen den zwei Atomensembles 4, 5, die einander als Paar zugeordnet sind und eine Gradiometer-Anordnung bilden, so gewählt wird, dass er einem Vielfachen der halben Wellenlänge $\lambda/2$ des Frequenzseitenbandes der 6.835 GHz-Frequenz, also $\lambda/2 = c/\Delta f = 21.9$ mm, entspricht, wobei c die Lichtgeschwindigkeit ist. Wird also beispielsweise eine optische Weglänge $d_1$ von 219 mm gewählt, also dem Zehnfachen, erfahren die Interferometer für alle Parameter dieselbe Phasenverschiebung, sodass sie das Gradiometersignal nicht beeinflusst.

Wie die Figur 3 zeigt, kann zusätzlich oder alternativ die optische Weglänge $d_2$ zwischen einem Atomensemble 4, 5 und einem das erste und das zweite Licht reflektierenden Spiegel 6 des Atominterferometers 7 auf einen solchen optimalen Abstand, nämlich einem Vielfachen der halben Wellenlänge $\lambda/2$ des Frequenzseitenbandes, eingestellt werden,.

Zusätzlich kann, wie die Figur 4 verdeutlicht, bei einem Atominterferometer, bei dem z.B. nur ein Atomensemble 4 in der Atomfalle 3 gefangen ist, ebenfalls eine Störungsunterdrückung durch eine solche Abstandsoptimierung erfolgen. Die Figur 4 zeigt einen zeitlichen Ablauf, der über die Zeit t aufgetragen ist. Zu einem Zeitpunkt $t_1$ wird das Atomensemble 4 in der Atomfalle 3 mit dem Laserlicht bestrahlt wird, wie durch die Pfeile verdeutlicht wird. Bei den weiteren Schritten des dortigen Ablaufs wird eine optimale optische Weglänge $d_1$ hergestellt. Beispielsweise kann durch eine Strahlteiler-

operation im Zeitpunkt $t_2$ das eine Atomensemble 4 in zwei voneinander getrennte Teilensembles 4a, 4b derart aufgeteilt werden, dass deren Abstand voneinander $d_1$ wiederum dem erwähnten optimalen Abstand entspricht, also einem Vielfachen der halben Wellenlänge $\lambda/2$ des Frequenzseitenbandes. Die Strahlteileroperation kann z.B. durch weiteres eingestrahltes Laserlicht durchgeführt werden, wie durch die Pfeile zum Zeitpunkt $t_2$ verdeutlicht wird.

**Patentansprüche**

1.  Atominterferometer (7) mit einer Laserlichtquelle (1), durch die erstes Laserlicht mit einer Grundfrequenz ($f_1$) abstrahlbar ist, und mit wenigstens einer Lichtabgabevorrichtung (2), durch die zweites Laserlicht mit einer Frequenz ($f_2$) abgebbar ist, die um eine Differenzfrequenz ($\Delta f$) von der Grundfrequenz ($f_1$) abweicht, und mit einer Atomfalle (3), in der ein oder mehrere Atomensembles (4, 5) einfangbar und mit dem ersten und dem zweiten Laserlicht bestrahlbar sind, **dadurch gekennzeichnet, dass**

    a) im Fall mehrerer Atomensembles (4, 5) die optische Weglänge ($d_1$) zwischen zwei Atomensembles (4, 5), die einander als Paar zugeordnet sind und eine Gradiometer-Anordnung bilden, der halben Wellenlänge ($\lambda/2$) oder einem ganzzahligen Vielfachen der halben Wellenlänge ($\lambda/2$) der Differenzfrequenz ($\Delta f$) oder einer anderen Störfrequenz entspricht
    und/oder
    b) die optische Weglänge zwischen einem ($d_2$) Atomensemble (4, 5) und einem das erste und das zweite Licht reflektierenden Spiegel (6) des Atominterferometers (7) der halben Wellenlänge ($\lambda/2$) oder einem ganzzahligen Vielfachen der halben Wellenlänge ($\lambda/2$) der Differenzfrequenz ($\Delta f$) oder einer anderen Störfrequenz entspricht.

2.  Atominterferometer nach Anspruch 1, **dadurch gekennzeichnet, dass** das Atominterferometer (7) als Gradiometer ausgebildet ist, bei dem zwei einander als Paar zugeordnete Atomensembles (4, 5) die Gradiometer-Anordnung bilden.

3.  Atominterferometer nach einem der vorhergehenden Ansprüche, **dadurch gekennzeichnet, dass** das Atominterferometer (7) als Gravimeter ausgebildet ist.

4.  Atominterferometer nach einem der vorhergehenden Ansprüche, **dadurch gekennzeichnet, dass** die Lichtabgabevorrichtung (2) als optischer Modulator ausgebildet ist, durch den das erste Laserlicht durch optische Modulation in das zweite Laserlicht wandelbar ist.

5.  Atominterferometer nach einem der vorhergehenden Ansprüche, **dadurch gekennzeichnet, dass** die optische Weglänge ($d_1$) zwischen zwei einander als Paar zugeordneten Atomensembles (4, 5) durch den Abstand der Start- und/oder Endorte zweier Interferometer voneinander festgelegt ist.

6.  Atominterferometer nach einem der vorhergehenden Ansprüche, **dadurch gekennzeichnet, dass** die optische Weglänge ($d_1$) zwischen zwei einander als Paar zugeordneten Atomensembles (4, 5) durch den Abstand zweier Interferometrie-Interaktionszonen voneinander festgelegt ist.

7.  Atominterferometer nach einem der vorhergehenden Ansprüche, **dadurch gekennzeichnet, dass** die optische Weglänge ($d_1$) zwischen zwei einander als Paar zugeordneten Atomensembles (4, 5) durch Strahlteileroperationen festgelegt ist.

8.  Atominterferometer nach einem der vorhergehenden Ansprüche, **dadurch gekennzeichnet, dass** die optische Weglänge eines Atomensembles (4, 5) zu einem das erste und das zweite Licht reflektierenden Spiegel (6) durch den Abstand einer Interferometrie-Interaktionszone von dem Spiegel (6) festgelegt ist.

Fig. 1

Fig. 2

Fig. 3

Fig. 4

Europäisches
Patentamt

European
Patent Office

Office européen
des brevets

## EUROPÄISCHER RECHERCHENBERICHT

Nummer der Anmeldung

EP 25 20 3575

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/319329 A1 (BIDEL YANNICK [FR] ET AL) 30. Oktober 2014 (2014-10-30) | 1-7 | INV. G01V7/02 |
| A | * Zusammenfassung * * Abbildungen 1-3,5 * * Seiten 3-5 * ----- | 8 | G01P15/00 |
| A | US 2024/134084 A1 (BONGS KAI [GB] ET AL) 25. April 2024 (2024-04-25) * Zusammenfassung * * Seiten 3-6; Abbildungen 1-3 * ----- | 1-8 | |
| A | US 2016/178792 A1 (KASEVICH MARK A [US] ET AL) 23. Juni 2016 (2016-06-23) * Zusammenfassung * * Abbildungen 1-6 * * Seiten 1-6 * ----- | 1-8 | |

RECHERCHIERTE SACHGEBIETE (IPC)

G01V
G01P
G01C

Der vorliegende Recherchenbericht wurde für alle Patentansprüche erstellt

| Recherchenort | Abschlußdatum der Recherche | Prüfer |
|---|---|---|
| Den Haag | 11. Dezember 2025 | Meyer, Matthias |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 20 3575

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2025

| Im Recherchenbericht angeführtes Patentdokument | Datum der Veröffentlichung | Mitglied(er) der Patentfamilie | Datum der Veröffentlichung |
|---|---|---|---|
| US 2014319329 A1 | 30-10-2014 | EP 2791620 A1 | 22-10-2014 |
|  |  | FR 2984491 A1 | 21-06-2013 |
|  |  | US 2014319329 A1 | 30-10-2014 |
|  |  | WO 2013088064 A1 | 20-06-2013 |
| US 2024134084 A1 | 25-04-2024 | EP 4291927 A1 | 20-12-2023 |
|  |  | GB 2603804 A | 17-08-2022 |
|  |  | US 2024134084 A1 | 25-04-2024 |
|  |  | WO 2022172031 A1 | 18-08-2022 |
| US 2016178792 A1 | 23-06-2016 | EP 3037849 A1 | 29-06-2016 |
|  |  | US 2016178792 A1 | 23-06-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014106811 A2